# FASCICULE DE BREVET EUROPEEN

(11) **EP 0 653 034 B1**
(45) Date de publication et mention de la délivrance du brevet: **12.03.1997**
(21) Numéro de dépôt: 93916028.9
(22) Date de dépôt: 22.07.1993
(51) Int. Cl.: F16L 21/08, F16L 21/04

(54) **JOINT VERROUILLE A EMBOITEMENT ENTRE ELEMENTS TUBULAIRES**
VERRIEGELTE MUFFENVERBINDUNG ZWISCHEN ROHRFÖRMIGEN ELEMENTEN
SEAL LOCKED BETWEEN ENGAGED TUBULAR MEMBERS

(30) Priorité: 23.07.1992 FR 9209106
(43) Date de publication de la demande: 17.05.1995
(73) Titulaire: PONT-A-MOUSSON S.A., 54000 Nancy (FR)
(72) Inventeur: PERCEBOIS, Alain, F-54700 Blenod-lès-Pont-à-Mousson (FR); VITEL, Jean-Pierre, F-54470 Thiaucourt-Regnieville (FR); RENARD, Philippe, F-54500 Vandoeuvre-lès-Nancy (FR); DEMOISSON, Jacques, F-54700 Loisy (FR)
(74) Mandataire: Puit, Thierry
(86) Numéro de dépôt international: FR9300750
(87) Numéro de publication internationale: WO9402770

(56) Documents cités:
- EP-A- 0 113 193
- EP-A- 0 541 472
- FR-A- 2 351 564
- GB-A- 2 167 145
- US-A- 1 525 101
- US-A- 2 832 615
- US-A- 3 594 023
- US-A- 4 878 698

## Description

La présente invention est relative à un joint verrouillé entre le bout uni d'un premier élément tubulaire et l'emboîtement d'un second élément tubulaire, du type comprenant une garniture d'étanchéité à compression axiale logée dans l'emboîtement, une couronne de verrouillage à dents internes entourant le bout uni, et un dispositif de bridage muni de moyens d'accrochage par rapport à l'emboîtement et adapté pour assurer la compression axiale de la garniture et la retenue anti-recul de la couronne de verrouillage, ce dispositif de bridage comprenant deux contre-brides, à savoir une contre-bride d'étanchéité adaptée pour comprimer axialement la garniture, et une contre-bride de verrouillage adaptée pour serrer la couronne de verrouillage sur le bout uni. Elle s'applique notamment à la pose des canalisations en fonte ductile.

On connaît, par le document EP-A-334 380, un joint verrouillé où le dispositif de bridage comporte une contre-bride unique assurant à la fois la compression axiale de la garniture et le serrage de la couronne de verrouillage sur le bout mâle. Par suite, le verrouillage du joint a une incidence sur l'étanchéité ; cette incidence se manifeste notamment dans les cas suivants :
(a) Au montage : les dents de la couronne de verrouillage viennent accrocher le bout uni lorsqu'ils sont poussés par la contre-bride. Cette dernière doit pouvoir avancer axialement afin de comprimer la garniture d'étanchéité. Elle entraîne donc le bout uni pendant cette compression. Un problème se pose alors si un jeu axial insuffisant existait au départ entre l'extrémité du bout uni et le fond de l'emboîtement : le bout uni vient alors en contact avec le fond de l'emboîtement, ce qui provoque la retenue de la contre-bride et empêche ainsi un écrasement suffisant de la garniture d'étanchéité ; cette dernière n'assure dès lors pas correctement sa fonction d'étanchéité.
(b) En service : on ne peut pas démonter le système de verrouillage ou effectuer un post-verrouillage en restant étanche.
(c) En service également, sous l'effet de la pression interne du fluide circulant dans la canalisation, le bout uni a tendance à faire reculer axialement la contre-bride, et donc à décomprimer la garniture d'étanchéité, ce qui peut provoquer une perte d'étanchéité.

Un joint selon le préambule de la revendication 1 est connu du document US-A-3 594 023.

L'invention a pour but de remédier partiellement ou totalement aux inconvénients exposés ci-dessus, et de manière générale d'éviter l'altération de la fonction d'étanchéité par celle de verrouillage.

A cet effet, l'invention a pour objet un joint verrouillé du type précité, caractérisé en ce que la couronne de verrouillage est munie d'un appendice avant en élastomère destiné à prendre appui sur la face arrière de la contre-bride d'étanchéité.

Suivant d'autres caractéristiques :
- la contre-bride d'étanchéité comporte des organes d'accrochage axial sur l'emboîtement, tandis que la contre-bride de verrouillage comporte des organes d'accrochage axial sur la contre-bride d'étanchéité ;
- les contre-brides comportent des moyens indépendants d'accrochage axial sur l'emboîtement ;
- les moyens d'accrochage de chaque contre-bride traversent librement l'autre contre-bride ;
- tous les organes d'accrochage sont positionnés radialement, du côté de l'emboîtement, par un rebord périphérique de la contre-bride d'étanchéité ;
- les organes d'accrochage de chaque contre-bride sont positionnés radialement, du côté de l'emboîtement, par un secteur de rebord périphérique solidaire de cette contre-bride ;
- il est prévu des moyens d'espacement pour assurer un espacement minimal entre les deux contre-brides lorsque le joint est assemblé ;
- lesdits moyens d'espacement comprennent une limitation de la longueur de vissage d'organes filetés d'accrochage de la contre-bride de verrouillage.

Des exemples de réalisation de l'invention vont maintenant être décrits en regard des dessins annexés, sur lesquels :
- la Fig. 1 est une demi-vue en coupe longitudinale d'un joint verrouillé conforme à l'invention, prise dans un plan diamétral (ligne I-I de la Fig. 3) qui passe par un organe d'accrochage de la contre-bride de verrouillage ;
- la Fig. 2 est une demi-vue analogue du même joint, prise dans un plan diamétral (ligne II-II de la Fig. 3) qui passe par un organe d'accrochage de la contre-bride d'étanchéité ;
- la Fig. 3 est une demi-vue en coupe de la contre-bride de verrouillage, prise suivant la flèche III de la Fig. 1 ou de la Fig. 2 ;
- les Fig. 4 et 5 sont des vues correspondant respectivement aux Fig. 1 et 2 et relatives à un deuxième mode de réalisation du joint verrouillé conforme à l'invention ;
- la Fig. 6 est une demi-vue en bout de la contre-bride de verrouillage, prise suivant le flèche VI de la Fig. 4 ou de la Fig. 5 ;
- la Fig. 7 est un quart de vue en bout du joint, prise suivant la flèche VII de la Fig. 4 ou de la Fig. 5 ;
- la Fig. 8 est une vue analogue à la Fig. 4, relative à une variante du joint des Fig. 4 à 7 ;
- les Fig. 9 et 10 sont des vues analogues aux Fig. 1 et 2 respectivement, prises suivant les lignes IX-IX et X-X de la Fig. 11 respectivement, mais relatives à un troisième mode de réalisation du joint verrouillé conforme à l'invention ; et
- la Fig. 11 est une demi-vue en bout prise suivant la flèche XI de la Fig. 9 ou de la Fig. 10.

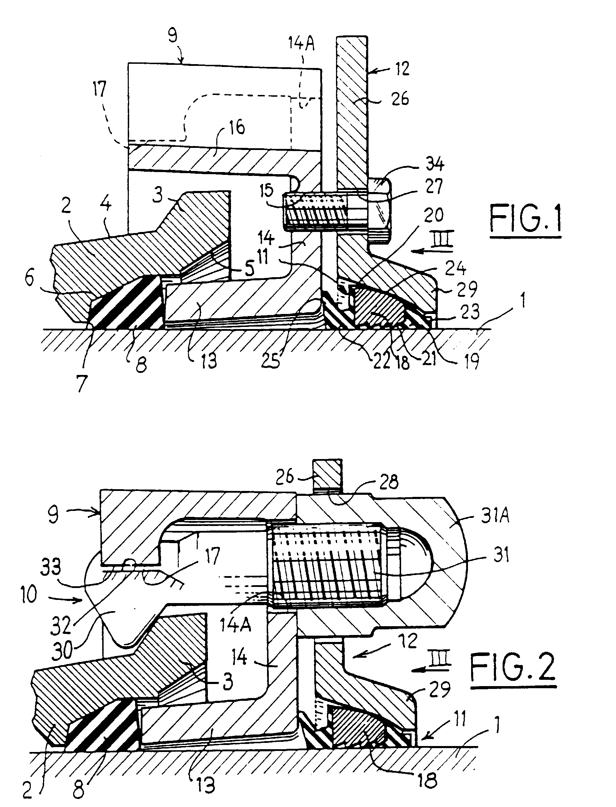

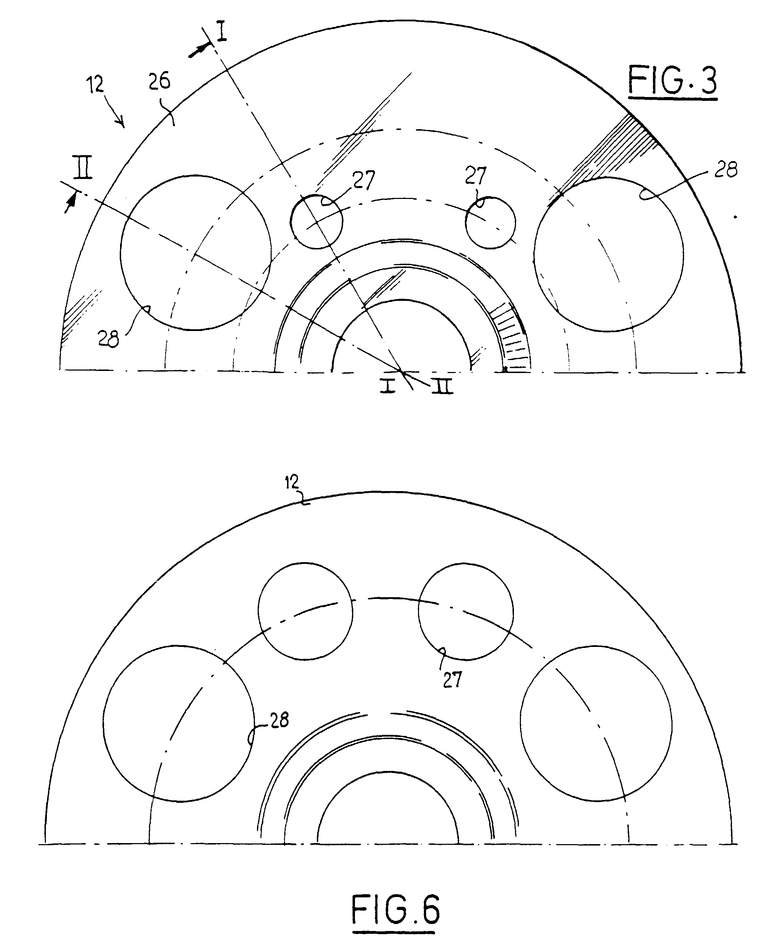

On a représenté aux Fig. 1 à 3 un joint verrouillé entre le bout uni 1 d'un premier élément tubulaire et l'emboîtement 2 d'un second élément tubulaire. Les deux éléments tubulaires peuvent être en particulier deux tuyaux identiques successifs d'une canalisation, notamment en fonte ductile, chaque tuyau comportant un bout uni, ou bout mâle, 1 à une extrémité et un emboîtement 2 à son autre extrémité. Pour les besoins de la présente description, on supposera que, comme représenté, les deux éléments tubulaires ont un axe commun horizontal.

Le bout uni 1 est extérieurement cylindrique, tandis que l'emboîtement 2 présente extérieurement, à partir de son entrée, une collerette 3 en saillie radiale puis une surface convergente 4. Intérieurement, l'emboîtement présente une surface d'entrée tronconique 5 suivie d'un logement 6 dont la surface est convergente et se termine par une face d'extrémité avant 7 à peu près radiale.

Le joint comprend une garniture d'étanchéité 8 à compression axiale, une contre-bride 9 d'étanchéité munie d'une série de boulons d'accrochage 10, un dispositif de verrouillage 11 et une contre-bride de verrouillage 12. On entend par "garniture à compression axiale" une garniture du type presse-étoupe, que l'on comprime mécaniquement dans la direction axiale.

La garniture 8 est en élastomère. Lorsqu'elle est enfilée sur le bout mâle et en butée libre sur la surface 7 de l'emboîtement, un espace libre peut subsister entre sa surface périphérique et le logement 6.

La contre-bride d'étanchéité 9 comprend un anneau intérieur continu 13, orienté à peu près axialement, adapté pour entourer avec un jeu notable le bout mâle 1 et pour pénétrer dans le logement 6 en comprimant axialement la garniture 8 contre la face radiale 7. La profondeur de cette pénétration est critique pour garantir les performances d'étanchéité voulues.

De l'extrémité arrière (à droite sur les Fig. 1 et 2) de l'anneau 13 part vers l'extérieur un voile radial continu 14 percé, en regard de la collerette 3 de l'emboîtement 2, de six trous taraudés 15 (Fig. 1) régulièrement répartis sur un même cercle.

De l'extrémité radialement extérieure du voile 14 part vers l'avant un rebord périphérique 16 qui recouvre la collerette 3 et comporte trois évidements à peu près semi-cylindriques 17 ouverts vers l'intérieur, régulièrement répartis et situés angulairement entre les trous 15 (Fig. 1 et 2). En regard de chaque évidement 17, le voile 14 comporte un perçage 14A.

Le dispositif de verrouillage 11 est une pièce composite réalisée par surmoulage et constituée d'une série d'inserts métalliques 18, constituant ensemble une couronne de verrouillage, noyés dans un collier 19 en élastomère. En variante, les inserts 18 pourraient être remplacés par une bague continue fendue, mais l'agencement à plusieurs inserts est préférable car il s'adapte mieux aux diverses configurations périphériques des tuyaux.

Chaque insert 18 est constitué par un bloc présentant une section trapézoïdale curviligne, avec une grande face radiale avant, une petite face radiale arrière, une face radialement extérieure 20 convergente vers l'arrière et de préférence bombée, et une face radialement intérieure de forme générale cylindrique ou plane mais pourvue d'une série de dents 21 d'accrochage sur le bout uni.

Le collier 19 comprend une partie avant cylindrique 22, qui peut être intérieurement dentée, une partie arrière cylindrique 23, qui peut elle aussi être intérieurement dentée, et un voile de liaison 24 constituant un revêtement de la face 20 des inserts.

La partie avant 22 se termine par un appendice avant 25 formant lèvre d'appui sur le voile 14 de la contre-bride 9. De par son élasticité, cette lèvre 25 empêche ainsi la contre-bride de verrouillage, lors de son serrage, de venir pousser la contre-bride d'étanchéité, évitant en cela l'altération de la fonction d'étanchéité par celle de verrouillage. Le collier 19 enrobe les inserts 18 de tous côtés, sauf sur leur face intérieure dentée.

La contre-bride de verrouillage 12 est constituée d'un voile plan et radial 26 présentant six trous lisses 27, de diamètre légèrement supérieur aux trous taraudés 15, et, angulairement entre les trois paires de trous 27, trois trous lisses 28 de diamètre nettement supérieur, régulièrement répartis. La périphérie radialement intérieure du voile 26 se raccorde à une partie de compression 29 de forme à peu près tronconique, convergente vers l'arrière, dont la surface interne est à peu près conjuguée de la surface 20 des inserts 18.

Le montage du joint ainsi décrit s'effectue comme suit, l'emboîtement étant en place.

On enfile successivement sur le bout uni les pièces 12, 11, 9 et 8, nettement décalées vers l'arrière par rapport à l'extrémité de ce bout uni. La garniture 8 et le dispositif de verrouillage 11 enserrent légèrement le bout uni.

On introduit ensuite le bout uni dans l'emboîtement, Puis on fait glisser axialement la garniture sur le bout uni jusqu'à ce qu'elle bute sur la face 7 de l'emboîtement.

Puis on déplace la contre-bride 9 vers l'avant jusqu'à contact de sa face avant contre la face arrière de la garniture.

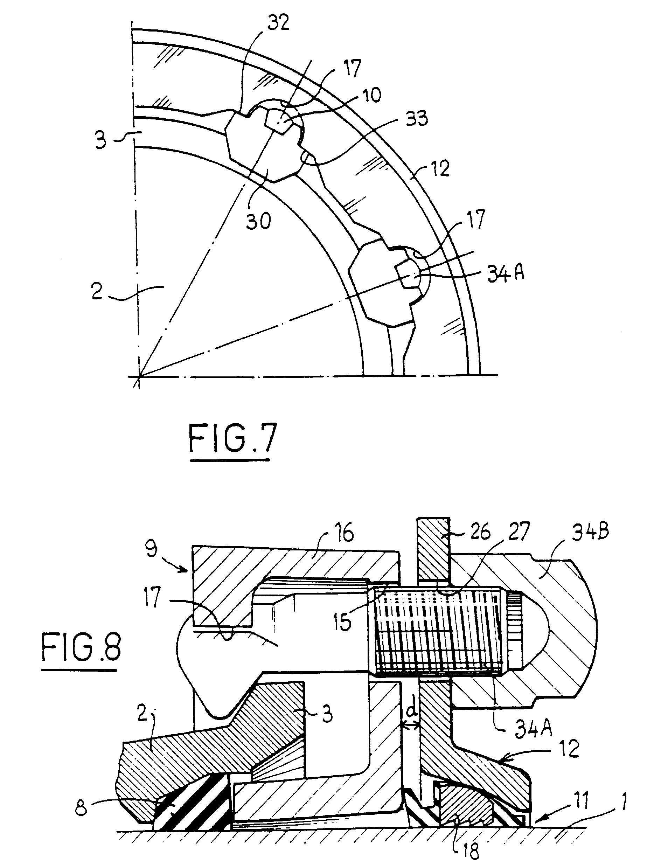

Ensuite, les vis 31 des trois boulons 10 (non représentés sur la Fig. 1), qui comportent à leur extrémité avant un bec excentrique 30, sont introduites par l'avant dans les trous 14A, et la contre-bride 9 est serrée vers l'avant par vissage d'écrous 31A sur chaque vis 31, les becs 30 prenant appui sur la collerette 3 de l'emboîtement et les écrous 31A sur la face arrière du voile 14 de la contre-bride. Ce serrage, par l'intermédiaire de l'anneau 13, comprime axialement la garniture 8 et assure ainsi l'étanchéité du joint. Comme on le voit sur la Fig. 2, le positionnement radial des becs 30 est assuré par la coopération de deux méplats latéraux 32 de chaque bec avec les surfaces extrêmes 33 des évidements 17. Le plan de coupe a été décalé à cet endroit sur la Fig. 2 pour faire apparaître cette coopération (voir aussi Fig. 7).

Quel que soit le jeu radial existant entre le bout mâle et l'emboîtement, et quelle que soit la position angulaire du bout mâle par rapport à l'axe de l'emboîtement, le réglage du vissage des écrous 31 permet d'obtenir l'étanchéité désirée sur toute la périphérie du joint.

Ensuite, on pousse le dispositif de verrouillage 11 vers l'avant jusqu'à ce que sa partie 25 bute contre la contre-bride 9, ce qui est aisé puisque ce dispositif est libre de toute compression radiale, et on amène la contre-bride de verrouillage 12 jusqu'au contact de la face convergente interne de celle-ci contre le voile 24. A la fin de ce déplacement, les écrous 31A traversent librement les trois trous 28 (Fig. 2).

Enfin, six vis de verrouillage 34 (Fig. 1) sont introduites d'arrière vers l'avant à travers les trous 27, qu'elles traversent librement, et vissées dans les trous 15 en regard. En serrant ces vis, on comprime radialement les inserts 18 sur le bout mâle, ce qui verrouille le joint.

On voit que le verrouillage du joint ne modifie en rien la position de la contre-bride d'étanchéité 9, de sorte que la fonction d'étanchéité, exclusivement assurée par cette dernière, n'est pas influencée par la fonction verrouillage, qui ne dépend que de la contre-bride de verrouillage 12. De même, on peut retirer vers l'arrière la contre-bride 12, après avoir dévissé les vis 34, sans incidence sur l'étanchéité.

Cependant, en service, la poussée vers l'arrière exercée sur le bout mâle par le fluide véhiculé peut faire légèrement reculer la contre-bride 12, via les inserts 18. Dans ce cas, la contre-bride 12 entraîne également vers l'arrière la contre-bride 9, ce qui décomprime la garniture d'étanchéité.

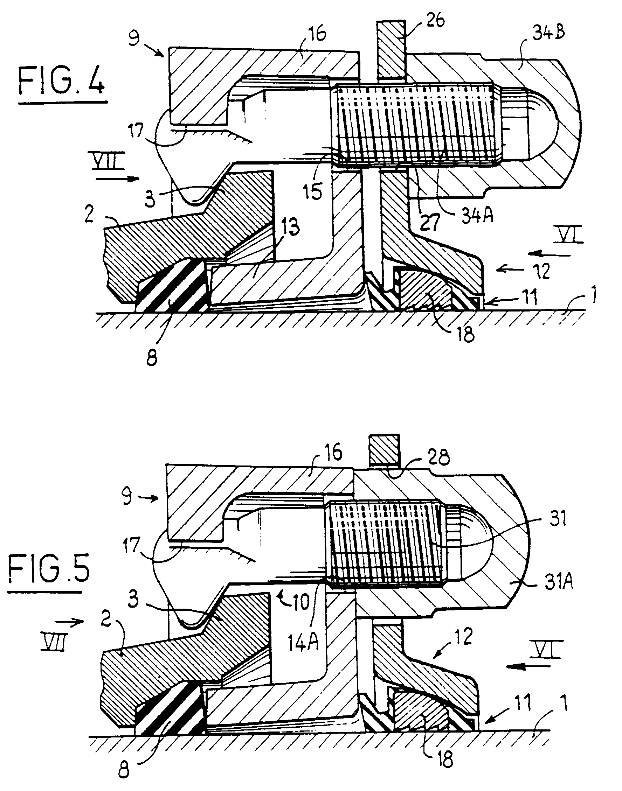

Ce risque est supprimé dans le mode de réalisation des Fig. 4 à 7, qui ne diffère du précédent que par le mode d'accrochage de la contre-bride de verrouillage 12.

Dans ce mode de réalisation, en effet, les trous 27 se trouvent sur le même cercle que les trous 28 (Fig. 6), et les trous 15 sont lisses. Les vis 34 sont remplacées par des vis 34A analogues aux vis 31 mais plus longues, associées à des écrous 34B qui sont de préférence identiques aux écrous 31A. De façon correspondante, le rebord 16 de la contre-bride 9 comporte neuf évidements 17 (Fig. 7).

Ainsi, lors du montage du joint, après avoir assuré l'étanchéité comme précédemment au moyen des boulons 10 (Fig. 5, qui est identique à la Fig 2), on amène le dispositif de verrouillage 11 puis la contre-bride 12, et on accroche cette dernière sur la collerette 3 de l'emboîtement au moyen des boulons 34A-34B : les vis 34A sont introduites par l'avant à travers les trous 15 et 27, et les écrous 34B sont vissés sur ces vis et prennent appui sur la face arrière du voile 26 de la contre-bride 12 (Fig. 4).

Ainsi, dans le mode des Fig. 4 à 7, les deux contre-brides s'accrochent indépendamment l'une de l'autre sur la collerette 3 de l'emboîtement, ce qui garantit qu'un éventuel recul de la contre-bride de verrouillage 12 n'affecte pas la compression de la garniture, donc l'étanchéité du joint.

Il est à noter que cet agencement présente encore un risque, qui est d'amener la contre-bride 12 au contact de la contre-bride 9 lors du verrouillage du joint. Ceci pourrait conduire à une surcompression, au moins locale, de la garniture 8.

Pour éviter ce risque, dans la variante de la Fig. 8, les filetages des vis longues 34A et des écrous 34B sont limités de façon que lorsque les écrous sont vissés à fond, la contre-bride se trouve partout à une distance au moins égale à une valeur prédéterminée d de la contre-bride 9, compte-tenu de la position la plus vers l'arrière envisageable pour cette dernière pour garantir l'étanchéité du joint.

Dans le même but, dans le mode de réalisation des Fig. 1 à 3, on peut limiter la longueur filetée des vis 34.

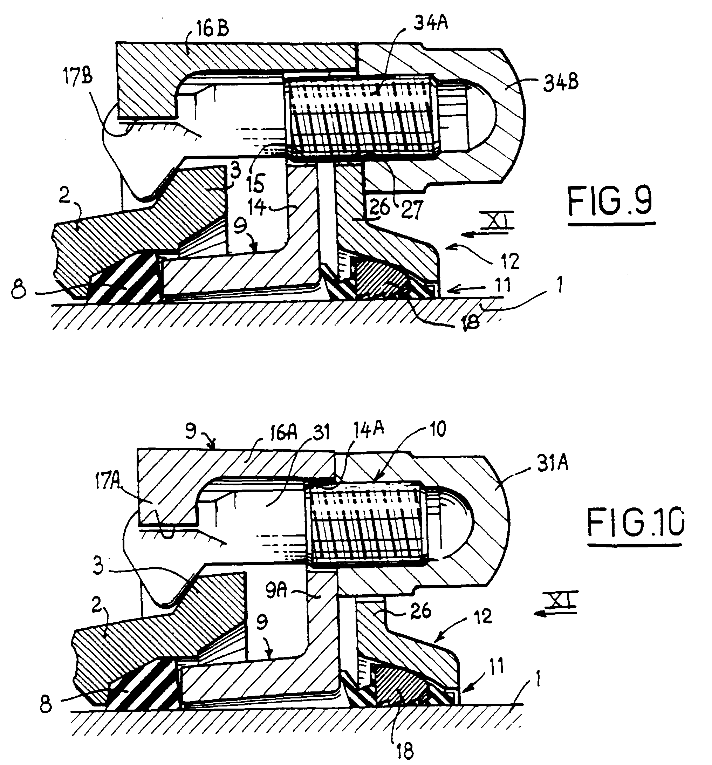

Le mode de réalisation représenté aux Fig. 9 à 11 ne diffère de celui des Fig. 4 à 7 (ou 8) que par la conformation de la partie radialement extérieure des deux contre-brides.

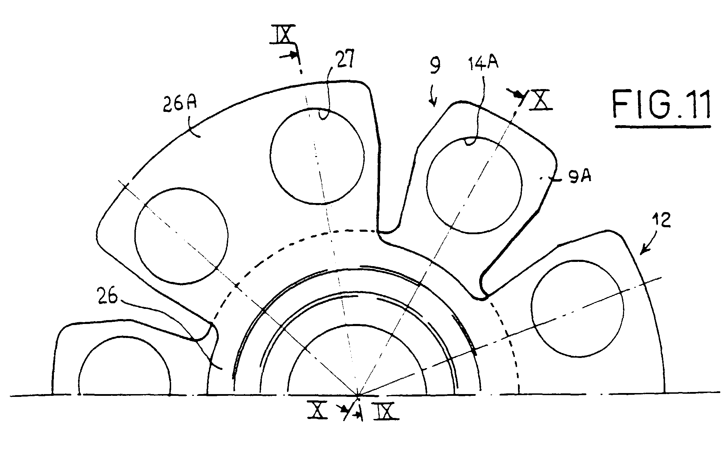

En effet, le voile 14 de la contre-bride d'étanchéité a, sur l'essentiel de sa périphérie, un diamètre extérieur à peu près égal à celui de la collerette 3 (Fig. 9), sauf à l'emplacement des trois boulons 10, où elle présente un appendice radial 9A percé d'un trou 14A (Fig. 10 et 11). Chaque appendice 9A porte un secteur de rebord périphérique 16A dirigé vers l'avant et ayant à son extrémité 17A une forme en U ouvert vers l'intérieur pour la retenue radiale d'un boulon court 10.

De même, le voile 26 de la contre-bride de verrouillage a un diamètre extérieur inférieur au plus petit diamètre défini par les écrous 31A en place (Fig. 10), mais, entre ces écrous, comporte trois appendices radiaux 26A munis chacun de deux trous 27 (Fig. 9 et 11). Chaque appendice 26A porte un secteur de rebord périphérique 16B, à peu près de même diamètre que les secteurs 16A, dirigé vers l'avant et ayant à son extrémité 17B une forme en U ouvert vers l'intérieur pour la retenue radiale de deux vis longues 34A.

Ce mode de réalisation assure une indépendance totale des deux contre-brides.

Dans chaque mode de réalisation, on choisit le nombre de vis ou de boulons, pour chaque contre-bride, en fonction du diamètre nominal des éléments tubulaires et de la pression nominale du fluide véhiculé.

## Revendications

1. Joint verrouillé entre le bout uni (1) d'un premier élément tubulaire et l'emboîtement (2) d'un second élément tubulaire, comprenant une garniture d'étanchéité (8) à compression axiale, une couronne de verrouillage (18) à dents internes (21) entourant le bout uni, et un dispositif de bridage (9, 12) muni de moyens (10, 34, 34A, 34B) d'accrochage par rapport à l'emboîtement et adapté pour assurer la compression axiale de la garniture (8) et la retenue anti-recul de la couronne de verrouillage, ce dispositif de bridage comprenant deux contre-brides, à savoir une contre-bride d'étanchéité (9) adaptée pour comprimer axialement la garniture (8), et une contre-bride de verrouillage (12) adaptée pour serrer la couronne de verrouilage (18) sur le bout uni (1), caractérisé en ce que la couronne de verrouillage (18) est munie d'un appendice avant (25) en élastomère destiné à prendre appui sur la face arrière de la contre-bride d'étanchéité (9).

2. Joint verrouillé suivant la revendication 1, caractérisé en ce que la contre-bride d'étanchéité (9) comporte des organes (10) d'accrochage axial sur l'emboîtement (2), tandis que la contre-bride de verrouillage (12) comporte des organes (34) d'accrochage axial sur la contre-bride d'étanchéité (9).

3. Joint verrouillé suivant la revendication 1, caractérisé en ce que les contre-brides (9, 12) comportent des moyens indépendants (10, 34A, 34B) d'accrochage axial sur l'emboîtement (2).

4. Joint verrouillé suivant la revendication 3, caractérisé en ce que les moyens (10, 34A, 34B) d'accrochage de chaque contre-bride (9, 12) traversent librement l'autre contre-bride.

5. Joint verrouillé suivant la revendication 3 ou 4, caractérisé en ce que tous les organes d'accrochage (10, 34A, 34B) sont positionnés radialement, du côté de l'emboîtement (2), par un rebord périphérique (16) de la contre-bride d'étanchéité (9).

6. Joint verrouillé suivant la revendication 3 ou 4, caractérisé en ce que les organes d'accrochage (10, 34A, 34B) de chaque contre-bride (9, 12) sont positionnés radialement, du côté de l'emboîtement (2), par un secteur de rebord périphérique (16A, 16B) solidaire de cette contre-bride.

7. Joint verrouillé suivant l'une quelconque des revendications 1 à 6, caractérisé en ce qu'il est prévu des moyens d'espacement pour assurer un espacement minimal (d) entre les deux contre-brides (9, 12) lorsque le joint est assemblé.

8. Joint verrouillé suivant la revendication 7, caractérisé en ce que lesdits moyens d'espacement comprennent une limitation de la longueur de vissage d'organes filetés (34, 34A, 34B) d'accrochage de la contre-bride de verrouillage (12).

## Patentansprüche

1. Verriegelte Verbindung zwischen dem Spitzende (1) eines ersten röhrenförmigen Elements und dem Muffenende (2) eines zweiten röhrenförmigen Elements, mit einer Axialdruckdichtung (8), einem Verriegelungsring (18) mit inneren Zähnen (21), die das Spitzende umgeben, und einer Klemmvorrichtung (9, 12), die mit Mitteln (10, 34, 34A, 34B) zur Montage an dem Muffenende versehen ist und so ausgeführt ist, daß sie den Axialdruck der Dichtung (8) und das Festhalten des Verriegelungsrings, so daß dieser sich nicht zurückbewegen kann, gewährleisten kann, wobei diese Klemmvorrichtung zwei Gegenflansche aufweist, nämlich einen Dichtungs-Gegenflansch (9), der so ausgeführt ist, daß er die Dichtung (8) axial zusammendrücken kann, und einen Verriegelungs-Gegenflansch (12), der so ausgeführt ist, daß er den Verriegelungsring (18) an das Spitzende (1) klemmen kann, dadurch gekennzeichnet, daß der Verrieglungsring (18) mit einem vorderen Ansatz (25) aus Elastomer versehen ist, der an der hinteren Fläche des Dichtungs-Gegenflansches (9) anliegen soll.

2. Verriegelte Verbindung nach Anspruch 1, dadurch gekennzeichnet, daß der Dichtungs-Gegenflansch (9) Glieder (10) zur axialen Befestigung am Muffenende (2) aufweist, während der Verriegelungs-Gegenflansch (12) Glieder (34) zur axialen Befestigung an dem Dichtungs-Gegenflansch (9) aufweist.

3. Verriegelte Verbindung nach Anspruch 1, dadurch gekennzeichnet, daß die Gegenflansche (9, 12) unabhängige Mittel (10, 34A, 34B) zur axialen Befestigung am Muffenende (2) aufweisen.

4. Verriegelte Verbindung nach Anspruch 3, dadurch gekennzeichnet, daß die Mittel (10, 34A, 34B) zur Befestigung jedes Gegenflansches (9, 12) den anderen Gegenflansch frei passieren.

5. Verriegelte Verbindung nach Anspruch 3 oder 4, dadurch gekennzeichnet, daß alle Befestigungsglieder (10, 34A, 34B) durch eine Umfangsleiste (16) des Dichtungs-Gegenflansches (9) auf der Seite des Muffenendes (2) radial positioniert sind.

6. Verriegelte Verbindung nach Anspruch 3 oder 4, dadurch gekennzeichnet, daß die Befestigungsglieder (10, 34A, 34B) jedes Gegenflansches (9, 12) durch einen Sektor (16A, 16B) einer Umfangsleiste, der fest mit diesem Gegenflansch verbunden ist, auf der Seite des Muffenendes (2) radial positioniert sind.

7. Verriegelte Verbindung nach einem der Ansprüche 1 bis 6, dadurch gekennzeichnet, daß Abstandsmittel vorgesehen sind, um nach der Montage der Verbindung zwischen den beiden Gegenflanschen (9, 12) einen Mindestabstand (d) zu gewährleisten.

8. Verriegelte Verbindung nach Anspruch 7, dadurch gekennzeichnet, daß die Abstandsmittel eine Beschränkung der Schraublänge der Gewindeglieder (34, 34A, 34B) zum Befestigen des Verriegelungs-Gegenflansches (12) aufweisen.

## Claims

1. Locked joint between the plain end (1) of a first tubular element and the sleeve (2) of a second tubular element, comprising an axial-compression sealing gasket (8), a locking ring (18) with internal teeth (21) surrounding the plain end, and a clamping device (9, 12) provided with means (10, 34, 34A, 34B) for fastening with respect to the sleeve and suitable for providing the axial compression of the gasket (8) and the anti-recoil retention of the locking ring, this clamping device comprising two mating flanges, namely a sealing mating flange (9) suitable for axially compressing the gasket (8), and a locking mating flange (12) suitable for tightening the locking ring (18) onto the plain end (1), characterized in that the locking ring (18) is provided with an elastomeric front appendage (25) intended to bear on the rear face of the sealing mating flange (9).

2. Locked joint according to Claim 1, characterized in that the sealing mating flange (9) includes members (10) for fastening axially onto the sleeve (2), whereas the locking mating flange (12) includes members (34) for fastening axially onto the sealing mating flange (9).

3. Locked joint according to Claim 1, characterized in that the mating flanges (9, 12) include independent means (10, 34A, 34B) for fastening axially onto the sleeve (2).

4. Locked joint according to Claim 3, characterized in that the fastening means (10, 34A, 34B) of each mating flange (9, 12) pass freely through the other mating flange.

5. Locked joint according to Claim 3 or 4, characterized in that all the fastening members (10, 34A, 34B) are positioned radially, on the sleeve (2) side, by a peripheral rim (16) of the sealing mating flange (9).

6. Locked joint according to Claim 3 or 4, characterized in that the fastening members (10, 34A, 34B) of each mating flange (9, 12) are positioned radially, on the sleeve (2) side, by a sector of peripheral rim (16A, 16B) secured to this mating flange.

7. Locked joint according to any one of Claims 1 to 6, characterized in that spacing means are provided to ensure a minimum spacing (d) between the two mating flanges (9, 12) when the joint is assembled.

8. Locked joint according to Claim 7, characterized in that the said spacing means comprise a limitation of the screwing length of threaded members (34, 34A, 34B) for fastening the locking mating flange (12).
